# EUROPEAN PATENT APPLICATION

(11) **EP 3 482 867 A2**
(43) Date of publication of application: **15.05.2019**
(21) Application number: 18203629.3
(22) Date of filing: 31.10.2018
(51) Int. Cl.: B23K 26/06, B23K 26/382

(54) **A METHOD OF FORMING A COOLING HOLE IN A COMPONENT**

(30) Priority: 09.11.2017 GB 201718509
(71) Applicant: Rolls-Royce plc, London SW1E 6AT (GB)
(72) Inventor: Grafton-Reed, Clive, Derby, Derbyshire DE24 8BJ (GB)
(74) Representative: Rolls-Royce plc

(57) **Abstract**

There is described a method of forming a cooling hole in a component having a wall 2 comprising a first surface 4 and a second surface 6, the method comprising: directing a first laser beam onto the first surface 4 of the component wall 2 at an oblique angle so as to drill a first hole 8 extending from the first surface 4 towards the second surface 6; directing a second laser beam onto the second surface 6 of the component wall 2 at an oblique angle so as to drill a second hole 8' extending from the second surface 6 towards the first surface 4, the first and second holes 8, 8' intersecting to form a cooling hole passing through the component wall 2 between the first and second surfaces 4, 6.

## Description

The disclosure relates to a method of forming a cooling hole in a component, as well as a component comprising a cooling hole formed using the method and a computer program, non-transitory computer readable storage medium and apparatus therefor.

Components, for example turbine blades, turbine vanes, combustion chamber walls, of gas turbine engines and other turbomachines are cooled to maintain the component at a temperature where the material properties of the component are not adversely affected and the working life and the integrity of the component is maintained.

One method of cooling such components provides a film of coolant on a surface of a wall of the component. The film of coolant is provided on the surface of the wall of the component by a plurality of effusion cooling holes which are either arranged perpendicular to the surface of the wall or at an angle to the surface of the wall. Effusion cooling holes are often cylindrical and angled in the direction of flow of hot fluid over the surface of the component. Angled effusion cooling holes have an increased internal surface area, compared to effusion cooling holes arranged perpendicular to the surface of the wall of the component, and the increased internal surface area increases the heat transfer from the wall of the component to the coolant. Angled effusion holes provide a film of coolant on the surface of the component which has improved quality compared to effusion cooling holes arranged perpendicular to the outer surface of the wall of the component.

Such effusion cooling holes are commonly formed using laser drilling. However, existing techniques do not allow the effusion cooling holes to be formed with optimised geometry.

It is therefore desirable to provide a method which enables better control over the geometry of the effusion cooling holes.

According to an aspect there is provided a method of forming a cooling hole in a component having a wall comprising a first surface and a second surface, the method comprising: directing a first laser beam onto the first surface of the component wall at an oblique angle so as to drill a first hole extending from the first surface towards the second surface; and directing a second laser beam onto the second surface of the component wall at an oblique angle so as to drill a second hole extending from the second surface towards the first surface, the first and second holes intersecting to form a cooling hole passing through the component wall between the first and second surfaces.

The type of lasers used to generate the first and/or second laser beam may be, but are not limited to, pulsed Nd:YAG lasers, Q-Switched YAG lasers or fibre lasers at a wavelength of between 300nm and 2000nm. An ablation laser may be used as the first laser beam, the second laser beam, or any combination as required by the process.

The first hole may taper in at least one dimension from the first surface.

The second hole may taper in at least one dimension from the second surface.

The first and second holes may taper in dimensions which are perpendicular to one another.

In a direction of flow, the first hole may taper axially such that upstream and downstream walls of the first hole converge thereby forming a laidback entry portion, and the second hole may taper laterally such that side walls of the second hole diverge thereby forming a fanned exit portion.

The second hole may also taper axially such that upstream and downstream walls of the second hole converge and such that the fanned exit portion is also laidback.

The upstream walls of the first and second holes may be axially aligned.

The first hole may extend through the thickness of the component from the first surface to the second surface.

The method may further comprise identifying an exit of the first hole within the second surface and positioning the second laser beam based on the position of the exit of the first hole.

The exit of the first hole may be identified using a camera.

Relative to the component, the first and second laser beams may be angled with respect to one another.

The method may further comprise ablating with an ablation laser beam a thermal barrier coating from a portion of the first and/or second surface prior to drilling the first and/or second holes.

The ablation laser beam may be smaller than the first or second laser beam used to drill the first and second holes.

An ablation laser may be used for the complete process, for a part of the process or for different parts of the process where material other than the thermal barrier coating is removed.

The component may be a turbine blade, turbine vane or combustion chamber.

In accordance with another aspect there is provided a component comprising at least one cooling hole formed using the method described above.

In accordance with another aspect there is provided a computer program which, when executed on a computer, causes performance of a method of forming a cooling hole in a component having a wall comprising a first surface and a second surface, the method comprising: directing a first laser beam onto the first surface of the component wall at an oblique angle so as to drill a first hole extending from the first surface towards the second surface; and directing a second laser beam onto the second surface of the component wall at an oblique angle so as to drill a second hole extending from the second surface towards the first surface, the first and second holes intersecting to form a cooling hole passing through the component wall between the first and second surfaces.

In accordance with another aspect there is provided a non-transitory computer readable storage medium comprising computer readable instructions which, when executed by a computer, cause performance of a method of forming a cooling hole in a component having a wall comprising a first surface and a second surface, the method comprising: directing a first laser beam onto the first surface of the component wall at an oblique angle so as to drill a first hole extending from the first surface towards the second surface; and directing a second laser beam onto the second surface of the component wall at an oblique angle so as to drill a second hole extending from the second surface towards the first surface, the first and second holes intersecting to form a cooling hole passing through the component wall between the first and second surfaces.

In accordance with another aspect there is provided an apparatus for forming a cooling hole in a component having a wall comprising a first surface and a second surface, the apparatus comprising a controller configured to: direct a first laser beam onto the first surface of the component wall at an oblique angle so as to drill a first hole extending from the first surface towards the second surface; and direct a second laser beam onto the second surface of the component wall at an oblique angle so as to drill a second hole extending from the second surface towards the first surface, the first and second holes intersecting to form a cooling hole passing through the component wall between the first and second surfaces.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
Figure 1 is a sectional side view of a gas turbine engine;
Figure 2 is a flowchart of a method of forming a cooling hole in a component;
Figure 3 is a cross-sectional view of a component of the gas turbine engine showing a first drill hole for forming a cooling hole;
Figure 4 is a plan view of the component showing the first drill hole;
Figure 5 is a cross-sectional view of the component showing a second drill hole for forming the cooling hole;
Figure 6 is a plan view of the component showing the second drill hole; and
Figure 7 is a schematic view of an apparatus for performing the method.

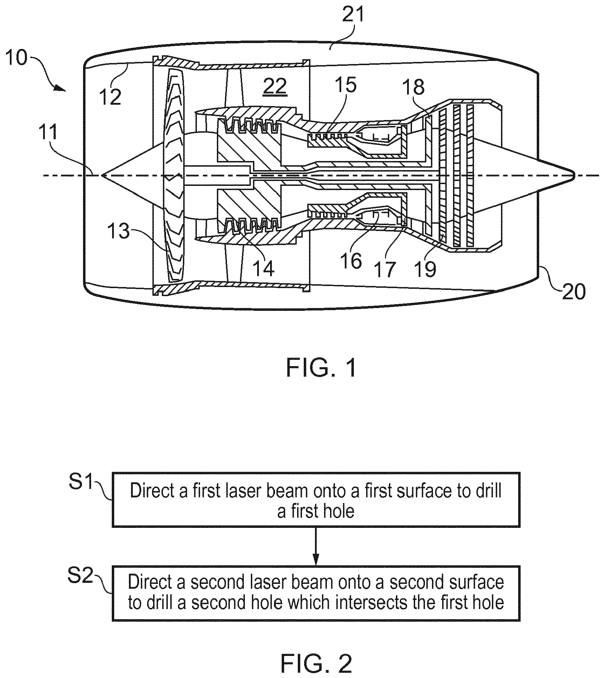

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

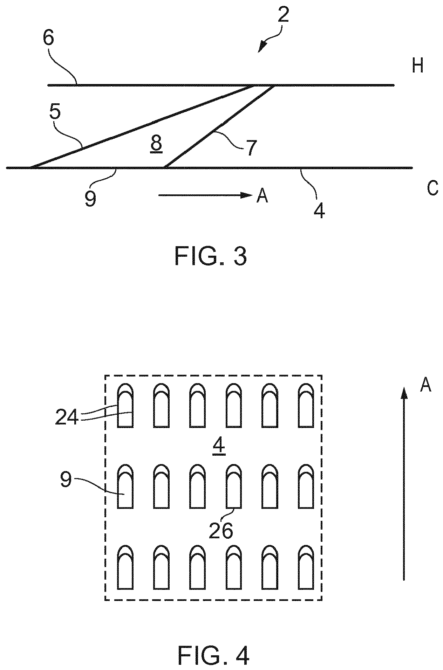

Figure 2 shows a flowchart of a method of forming a cooling hole in a component having a wall 2 as shown in Figure 3. The component may be a turbine blade, turbine vane or combustion chamber (combustor) of a gas turbine engine or other turbomachine.

The wall 2 comprises a first surface 4 and a second surface 6 which are located on opposite sides of the wall 2. As denoted by the "C" and "H" labels shown in Figure 3, in use, a relatively cold fluid flows over the first surface 4 and a relatively hot fluid flows over the second surface 6. In particular, the cold and hot fluids may flow over the first and second surfaces 4, 6 from left to right as shown in Figure 3.

In a first method step S1, a first hole 8 is drilled through the wall 2 in a direction extending from the first surface 4 to the second surface 6. The first hole 8 is drilled by a first laser beam which is angled relative to the first surface 4 (through orienting the component or beam). The first laser beam may have a rectangular shape and be generated using a square fibre optic, with the first hole 8 being formed by percussion drilling.

As shown in Figure 3, the first hole 8 tapers axially such that an upstream surface 5 converges towards a downstream surface 7 when passing from the first surface 4 to the second surface 6. An inlet 9 formed in the first surface 4 is therefore elongated in the axial direction (A) and is referred to as being "laidback". As shown in Figure 4, the first hole 8 has sidewalls 24 which run parallel to one another. The inlet 9 has an edge 26 which is straight and extends perpendicularly to the axis of the first hole 8.

In a second method step S2, a second hole 8' is drilled through the wall 2 in a direction extending from the second surface 6 to the first surface 4. The second hole 8' is drilled by a second laser beam which is angled relative to the second surface 6 (through orienting the component or beam). The second laser beam may again have a rectangular shape, but with the rectangle oriented perpendicularly to the first laser beam such that it extends across the component (in a radial or circumferential direction). The second hole 8' may again be formed by percussion drilling

As shown, an upstream surface 5' of the second hole 8' is axially aligned with the upstream surface 5 of the first hole 8. In effect, the upstream surface 5 is not ablated by the second laser beam. However, the second laser beam does ablate a portion of the downstream surface 7 adjacent the second surface 6 to form a further downstream surface 7' which is angled relative to the downstream surface 7 formed by the first laser beam.

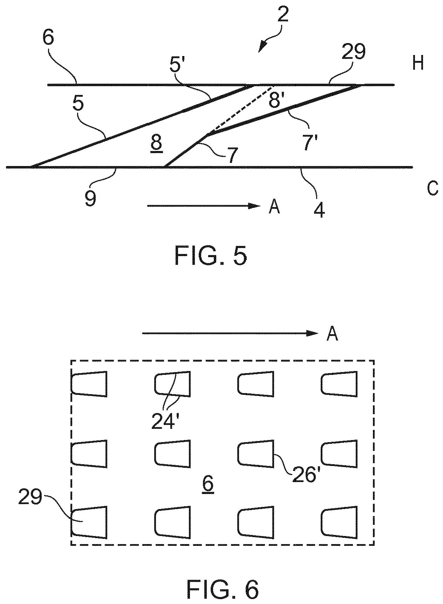

As shown in Figure 5, the second hole 8' tapers axially such that the upstream and downstream surfaces 5', 7' converge when passing from the second surface 6 towards the first surface 4 (or diverge in the direction of flow). An outlet 29 formed in the second surface 6 is therefore elongated in the axial direction and is referred to as being "laidback". As shown in Figure 6, the second hole 8 has sidewalls 24' which taper laterally such that they diverge away from one another in the direction of flow. The outlet 29 is therefore also referred to as being "fanned". The outlet 29 has an edge 26' which is straight and extends perpendicularly to the axis of the second hole 8'.

The first and second holes 8, 8' form a cooling hole which extends from the first surface 4 to the second surface 6 and thus from the cold side to the hot side of the component. By forming the cooling hole by drilling from opposing direction it is possible to obtain optimised geometry for both the inlet and outlet of the cooling hole. Specifically, it is possible to obtain a cooling hole which has a laidback entry portion that is elongated in the axial direction and a laterally fanned exit portion. The laidback entry portion improves the capture of the cooling air on the cold side and the fanned exit portion produces a wide fan on the hot side thus increasing the effectiveness of the cooling air. Such geometry is achieved without needing to use more costly production methods, such as direct laser deposition.

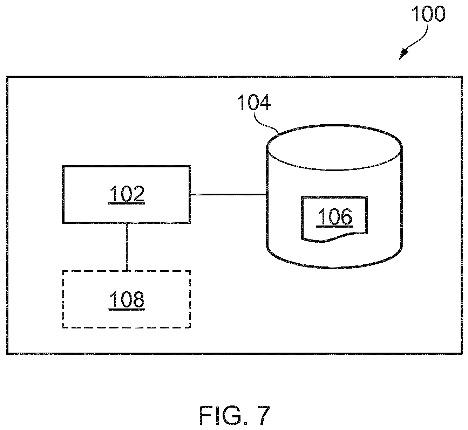

Figure 7 depicts a schematic view of an apparatus 100 for performing the methods described above. The apparatus 100 generally comprises a controller 102 which is in communication with a memory 104 on which is stored a computer program 106 comprising computer readable instructions.

The controller 102 may comprise any suitable circuitry to cause performance of the methods. In particular, the controller 102 may comprise: at least one application specific integrated circuit (ASIC); and/or at least one field programmable gate array (FPGA); and/or single or multi-processor architectures; and/or sequential (Von Neumann)/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

By way of an example, the controller may comprise at least one processor and at least one memory (such as the memory 104). The processor(s) may include at least one microprocessor and may comprise a single core processor, may comprise multiple processor cores (such as a dual core processor or a quad core processor), or may comprise a plurality of processors (at least one of which may comprise multiple processor cores).

The memory 104 may be any suitable non-transitory computer readable storage medium, data storage device or devices, and may comprise a hard disk and/or solid state memory (such as flash memory). The memory 104 may be permanent non-removable memory, or may be removable memory (such as a universal serial bus (USB) flash drive).

The computer program 106 may be transferred from a non-transitory computer readable storage medium to the memory 104. Such a non-transitory computer readable storage medium may be, for example, a USB flash drive, an optical disk (such as a compact disc (CD), a digital versatile disc (DVD) or a Blu-ray disc). In some examples, the computer program 106 may be transferred to the memory 104 via a wireless signal or via a wired signal.

The memory 104 stores the computer program 106 so that the computer readable instructions may then be read by the processor 102. The computer program 106 may be software or firmware, or may be a combination of software and firmware.

The apparatus 100 further comprises a laser drilling device 108 which is in communication with the controller 102. The laser drilling device 108 comprises one or more lasers and may also include a manipulating device which is configured to orientate the laser(s) relative to the component (by moving either the laser(s) and/or the component). In other arrangements, the laser drilling device 108 may be separate from the apparatus 100.

The instructions provided by the computer program 106 causes the controller 102 to control the laser drilling device 108 and to thereby cause performance of the methods described herein and as illustrated in Figure 2.

The controller 102 may cause performance of the methods automatically or semiautomatically with input from an operator. The apparatus 100 may therefore further comprise suitable input and output devices to enable interaction with the operator. For example, the input devices may comprise one or more of a keyboard, a keypad, a touchpad, a touchscreen display, and a computer mouse. The controller 102 is configured to receive signals from the input device. The output device may be any suitable device for conveying information to a user. For example, the output device may be a display (such as a liquid crystal display, or a light emitting diode display, or an active matrix organic light emitting diode display, or a thin film transistor display, or a cathode ray tube display), and/or a loudspeaker, and/or a printer (such as an inkjet printer or a laser printer). The controller 102 is arranged to provide a signal to the output device to cause the output device to convey information to the operator.

Where the component is a combustor, the optimised geometry of the cooling holes may allow the combustor to run hotter and so reduce NO_{X} emissions. It may also reduce the amount of air required by the combustor allowing more air to be used elsewhere in the engine.

The first and second holes may be drilled simultaneously or sequentially. Where they are drilled sequentially, then it is necessary to identify the exit of the first hole 8 within the second surface 6 and position the second laser beam on the second surface 6 relative to the exit of the first hole 8. This can be achieved using a co-axial camera system which is aligned along the axis of the beam or some other arrangement which achieves alignment of the drilling point to the desired point. Alternatively, the position of the exit of the first hole 8 may be determined based on data associated with the drilling procedure.

The second hole 8' may be drilled by re-orienting the laser beam (without moving the component) to access the hot side, or by re-orienting the component (without moving the laser beam) so that the laser beam may access the hot side, or by using two separate lasers (i.e. one laser for the cold side and another laser for the hot side).

The first and second steps could be carried out on separate machines or on the same machine with or without different optical set ups.

The fan shapes can be achieved by ablating the fan parts by scanning the beam over the surface so as to generate the form layer by layer down into the material, starting from both the hot and cold sides either simultaneously or sequentially.

Where a thermal barrier coating (TBC) is provided on the first and/or second surfaces 4, 6, a laser beam may be used to remove the TBC prior to drilling the first and second holes so as to avoid delamination of the TBC. In particular, different laser parameters/sources delivered either through the same optics or an additional set of optics may be used for this purpose. The ablation laser would typically have a much smaller spot size than the drilling laser and thus may use different optics.

The first and second holes 8, 8' have been described as being formed by percussion drilling to form a straight (square) edged hole. However, in other examples, the first hole 8 may be formed by trepan drilling using a round beam to generate the axial extension at the inlet 9 (forming a rounded edged hole). Similarly, the second hole 8' may be formed by trepan drilling using a round beam. The second hole 8' may also be formed by percussion drilling using a rectangular beam which is oriented axially, but moved to create the width of the fan (forming a straight or square edged hole).

Although it has been described that the first and second holes 8, 8' extend through the thickness of the wall 2, they may extend only partially through the thickness but intersect one another to form a complete passageway through the wall 2.

In other examples, the exit portion may only be fanned laterally and not laidback.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of forming a cooling hole in a component having a wall comprising a first surface and a second surface, the method comprising:
directing a first laser beam onto the first surface of the component wall at an oblique angle so as to drill a first hole extending from the first surface towards the second surface; and
directing a second laser beam onto the second surface of the component wall at an oblique angle so as to drill a second hole extending from the second surface towards the first surface, the first and second holes intersecting to form a cooling hole passing through the component wall between the first and second surfaces.

2. A method as claimed in claim 1, wherein the first hole tapers in at least one dimension from the first surface.

3. A method as claimed in claim 1 or 2, wherein the second hole tapers in at least one dimension from the second surface.

4. A method as claimed in claim 3 when dependent on claim 2, wherein the first and second holes taper in dimensions which are perpendicular to one another.

5. A method as claimed in claim 4, wherein, in a direction of flow, the first hole tapers axially such that upstream and downstream walls of the first hole converge thereby forming a laidback entry portion, and the second hole tapers laterally such that side walls of the second hole diverge thereby forming a fanned exit portion.

6. A method as claimed in claim 5, wherein the second hole also tapers axially such that upstream and downstream walls of the second hole converge and such that the fanned exit portion is also laidback.

7. A method as claimed in claim 5 or 6, wherein the upstream walls of the first and second holes are axially aligned.

8. A method as claimed in any preceding claim, wherein the first hole extends through the thickness of the component from the first surface to the second surface.

9. A method as claimed in claim 8, further comprising identifying an exit of the first hole within the second surface and positioning the second laser beam based on the position of the exit of the first hole.

10. A method as claimed in any preceding claim, wherein the exit of the first hole is identified using a camera.

11. A method as claimed in any preceding claim, wherein, relative to the component, the first and second laser beams are angled with respect to one another.

12. A method as claimed in any preceding claim, further comprising ablating with an ablation laser beam a thermal barrier coating from a portion of the first and/or second surface prior to drilling the first and/or second holes.

13. A method as claimed in claim 12, wherein the ablation laser beam is smaller than the first or second laser beam used to drill the first and second holes.

14. A computer program which, when executed on a computer, causes performance of a method of forming a cooling hole in a component having a wall comprising a first surface and a second surface, the method comprising:
directing a first laser beam onto the first surface of the component wall at an oblique angle so as to drill a first hole extending from the first surface towards the second surface; and
directing a second laser beam onto the second surface of the component wall at an oblique angle so as to drill a second hole extending from the second surface towards the first surface, the first and second holes intersecting to form a cooling hole passing through the component wall between the first and second surfaces.

15. An apparatus for forming a cooling hole in a component having a wall comprising a first surface and a second surface, the apparatus comprising a controller configured to:
direct a first laser beam onto the first surface of the component wall at an oblique angle so as to drill a first hole extending from the first surface towards the second surface; and
direct a second laser beam onto the second surface of the component wall at an oblique angle so as to drill a second hole extending from the second surface towards the first surface, the first and second holes intersecting to form a cooling hole passing through the component wall between the first and second surfaces.
